# EUROPÄISCHE PATENTSCHRIFT

(11) **EP 0 559 107 B1**
(45) Veröffentlichungstag und Bekanntmachung des Hinweises auf die Patenterteilung: **05.06.1996**
(21) Anmeldenummer: 93103175.1
(22) Anmeldetag: 27.02.1993
(51) Int. Cl.: B60Q 1/26, B60Q 1/30

(54) **Fahrzeugleuchte**
Vehicle lights
Feux pour véhicule

(30) Priorität: 03.03.1992 DE 4206624
(43) Veröffentlichungstag der Anmeldung: 08.09.1993
(73) Patentinhaber: Hella KG Hueck & Co., D-59552 Lippstadt (DE)
(72) Erfinder: Weddemann, Heribert, W-4780 Lippstadt (DE); Bewernick, Heinz, W-4780 Lippstadt (DE); Herting, Dieter, W-4780 Lippstadt-Hörste (DE)

(56) Entgegenhaltungen:
- WO-A-91/17067

## Beschreibung

Die Erfindung betrifft eine Fahrzeugleuchte, welche auf ein Karosserieteil aufgesetzt befestigbar ist, deren Innenraum von einer an der Karosserie festsetzbaren Grundplatte aus Kunststoff, einem schalenförmigen Gehäuse aus Kunststoff und einer Lichtscheibe gebildet wird, die in einer Öffnung einer seitlichen Gehäusewandung angeordnet ist und an die Grundplatte mindestens ein Steg angeformt ist, auf dem das Gehäuse mit seiner Innenseite anliegt.

Eine derartige Fahrzeugleuchte, die auf der Außenseite der Kofferraumklappe festsetzbar ist, ist in der DE-OS 38 36 032 offenbart. Bei der hier dargestellten und beschriebenen Fahrzeugleuchte weist die Grundplatte und damit auch der freie Rand des schalenförmigen Gehäuses eine nahezu quadratische Form auf, so daß die Grundplatte und das Gehäuse für sich allein, aber erst recht nachdem sie zusammengefügt sind, eine hohe Verwindungssteifigkeit zeigen. Diese Verwindungssteifigkeit wird noch dadurch erhöht, daß die rechtwinklig zur Grundplatte verlaufende Lichtscheibe unmittelbar an eine Kante der Grundplatte angeformt ist und damit eine Einheit mit der Grundplatte bildet. Um die Verwindungssteifigkeit derartiger relativ kleinen Leuchten noch zu erhöhen, könnte man die Wandungsstärke der Grundplatte und des Gehäuses erhöhen, ohne daß damit die Materialkosten stark belastet würden. Eine starke Kostenbelastung durch Verstärkung der Materialdicke würde jedoch bei großen Leuchten auftreten, bei denen mehrere Lichtquellen mit eigenem Reflektor zeilenförmig nebeneinander angeordnet sind. Um auch bei solchen Leuchten eine extrem dünne Wandungsstärke für die Grundplatte und das Gehäuse bei ausreichender Verwindungssteifigkeit wählen zu können, liegt es nahe, diese Leuchtenteile durch Rippen zu versteifen. Würde man bei der gattungsgemäßen Leuchte die Versteifungsrippen im Inneren des schalenförmigen Gehäuses an dieses anspritzen, so würde sich an den Übergangsstellen von den Rippen zur Gehäuseaußenfläche eine Materialanhäufung ergeben, die aufgrund der Materialschwindung beim Abkühlen des Spritzlings auf der Außenseite des Gehäuses zu Einfallstellen führen würde. Dieser Nachteil tritt nicht auf, wenn man wie in der DE-OS 38 36 032 dargestellt, die Stege an die Grundplatte anformt. Hierbei ist der Steg doppelwandig ausgeführt und im Randbereich der Grundplatte verlaufend angeordnet. Diese Ausführung und dieser Verlauf des Stegs läßt sich jedoch nicht immer anwenden, insbesondere dann nicht, wenn die Leuchten in ihrem Randbereich sehr flach gehalten sind. Bei einwandigen und dünnen Versteifungsstegen für die Grundplatte müssen diese, um eine Versteifungswirkung zu zeigen, in einer großen Anzahl und möglichst sich kreuzend angeordnet sein. Dieses ist jedoch bei den meisten Leuchten wegen des fehlenden Platzangebots nicht möglich.

Aufgabe der Erfindung ist es, auch bei solchen gattungsgemäßen Fahrzeugleuchten, deren Längen- und Breitenmaß stark voneinander abweichen und dünne Wandungsstärken bei dem Gehäuse und der Grundplatte aufweisen nicht nur die Grundplatte durch Stege zu versteifen, sondern auch das Gehäuse, ohne daß zusätzliche Stege an das Gehäuse angespritzt werden müssen und darüber hinaus weiterhin ein Glühlampenwechsel möglich ist. Diese Aufgabe wird erfindungsgemäß dadurch gelöst, daß bei einer Fahrzeugleuchte, deren Grundplatte ein größeres Längen- als Breitenmaß aufweist,
- die Lichtscheibe ein lösbar an der Fahrzeugleuchte befestigtes separates Teil ist,
- der Steg der Grundplatte zwischen den beiden Längsseiten und der Längserstreckung der Grundplatte verläuft,
- der Außenrand des Gehäuses und der Grundplatte miteinander und zusätzlich der Steg der Grundplatte mit seiner Stirnfläche mit der Innenseite des Gehäuses verschweißt sind, wobei beim Schweißvorgang der Steg und das Gehäuse ausschließlich im Bereich ihrer Grenzfläche plastifiziert werden.

Der an die Grundplatte angeformte Steg teilt den Innenraum der Leuchte in zwei Kammern auf, welche sich in ihrer Längsausdehnung in Richtung der Längsausdehnung der Grundplatte erstrecken. Dadurch erhält der schmale und lange Hohlkörper eine große Verwindungssteifigkeit, welche durch das Verschweißen des Stegs mit dem Gehäuse und den Außenrändern der Grundplatte und des Gehäuses miteinander noch wesentlich erhöht ist. Trotz der unlösbaren Verbindung zwischen der Grundplatte und dem Gehäuse ist ein Glühlampenwechsel einfach und leicht durchführbar, da die Lichtscheibe ein separates Teil ist und lösbar an der Fahrzeugleuchte befestigt ist.

Bei einer vorteilhaften Ausgestaltung der Erfindung ist der an die Grundplatte angespritzte und mit dem Gehäuse verschweißte Steg in seiner Längserstreckung unterbrochen. Diese Unterbrechung kann einerseits einer Kabeldurchführung und andererseits einem besseren Luftaustausch zwischen den durch den Steg gebildeten Kammern dienen.

Soll die Steifigkeit des durch das Gehäuse und die Grundplatte gebildeten Hohlkörpers noch erhöht werden, so können mehrere parallel verlaufende und sich kreuzende Stege an die Grundplatte angeformt mit dem Gehäuse verschweißt werden.

Bei einer besonders vorteilhaften Weiterbildung der Erfindung wird als Verfahren zur Herstellung der Schweißverbindung zwischen Gehäuse und der Grundplatte das Reibschweißen angewendet. Durch Reibschweißen ist es sicher, daß die Außenseite des Gehäuses durch den Schweißvorgang unbeeinträchtigt bleibt. Beim Reibschweißen ist es vorteilhaft, wenn das Gehäuse und die Grundplatte in einer linearen Richtung zueinander vibrieren und die Vibrationsrichtung in Längserstreckung der Grundplatte und des Gehäuses erfolgt. Dadurch kann der Steg der Grundplatte, welcher zwischen den beiden Längsseiten und in Richtung der Längserstreckung der Grundplatte verläuft, auch wenn er sehr dünnwandig ausgeführt ist, durch die Reibungskräfte nicht quer zu seiner Längserstreckung umgebogen werden. Außerdem bestehen auch an den miteinander zu verschweißenden Längsseiten der Grundplatte und des Gehäuses keine Querkräfte und somit können die Grundplatte und das Gehäuse entsprechend dünnwandig gestaltet werden.

Ein weiterer Vorteil ist es, wenn bei einer langgestreckten rechteckförmigen Grundplatte der Steg annähernd in einem äquidistanten Abstand zu den langen Seitenrändern der Grundplatte verläuft. Dadurch ist die langgestreckte Fahrzeugleuchte besonders verwindungssteif. Dies trifft besonders dann zu, wenn der Steg annähernd mittig zwischen den Längsseiten der Fahrzeugleuchte verläuft.

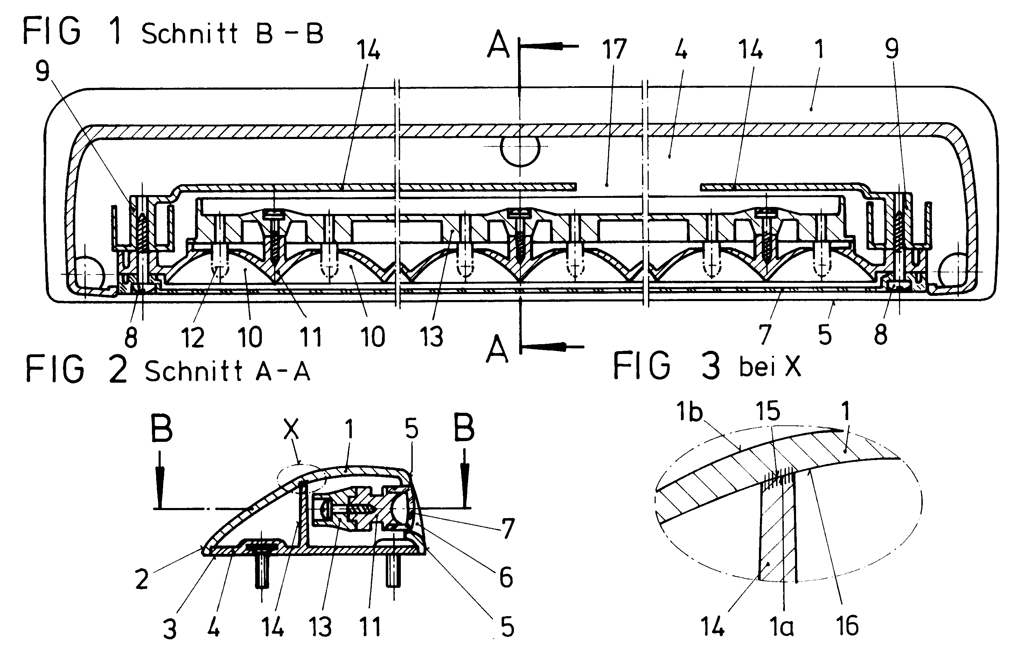

Die Zeichnung veranschaulicht ein vorteilhaftes Ausführungsbeispiel der Erfindung, und zwar zeigen
- Figur 1: einen Längsschnitt nach der Linie B-B durch die in Fig. 2 dargestellte Leuchte
- Figur 2: einen Schnitt nach der Linie A-A durch die Leuchte in Fig. 1 und
- Figur 3: eine vergrößerte Darstellung der Einzelheit X.

Die Leuchte besteht im wesentlichen aus dem schalenförmigen Gehäuse (1), welches mit seinem äußeren Rand (2) auf den äußeren Rand (3) der Grundplatte (4) aufgesetzt und mit diesem verschweißt ist. Das Gehäuse (1) und die Grundplatte (4) bestehen aus Kunststoff. Die Grundplatte (4) und damit der äußere Rand (2) des schalenförmigen Gehäuses (1) haben eine langgestreckte Rechteckform. In die lange Seitenwandung (5) des Gehäuses (1) ist eine Öffnung (6) eingebracht, die von der Lichtscheibe (7) verschlossen ist. Die Lichtscheibe (7) ist mittels Schrauben (8) an Böckchen (9) angeschraubt, die an die Grundplatte (4) angespritzt sind. Zusammen mit der Lichtscheibe (7) ist der mehrere Reflektoren (10) aufweisende Reflektorkörper (11) mit dem Böckchen (9) verschraubt. In einzelnen Reflektoren (10) ragen die Glühlampen (12) hinein, die von dem Lampenträger (13), der mit dem Reflektorkörper (11) verschraubt ist, getragen werden.

An die Grundplatte (4) ist der Steg (14) angespritzt, der im mittleren Bereich der Grundplatte (4) und zwar parallel zu der langen Seitenwandung (5) des Gehäuses (1) verläuft. Der Steg (14) ist mit seiner langen Stirnfläche (15) mit der Unterseite (16) des Gehäuses (1) verschweißt, und zwar derart, daß beim Verschweißen lediglich die beiden Grenzflächen (15) und (1a) plastifiziert werden. Dieses kann durch Reibschweißen erfolgen. Damit wird sichergestellt, daß die Außenseite (1b) des Gehäuses (1) durch den Schweißvorgang unbeeinträchtigt bleibt.

Die Unterbrechung (17) des Stegs (14) ermöglicht die Durchführung der Stromzuleitungen für die Glühlampen (12).

## Patentansprüche

1. Fahrzeugleuchte, welche auf ein Karosserieteil aufgesetzt befestigbar ist, deren Innenraum von einer an der Karosserie festsetzbaren Grundplatte aus Kunststoff, einem schalenförmigen Gehäuse aus Kunststoff und einer Lichtscheibe gebildet wird, die in einer Öffnung einer seitlichen Gehäusewandung angeordnet ist und wobei an die Grundplatte mindestens ein Steg angeformt ist, auf dem das Gehäuse mit seiner Innenseite aufliegt, dadurch gekennzeichnet, daß bei einer Fahrzeugleuchte, deren Grundplatte (4) ein größeres Längenmaß als Breitenmaß aufweist,
- die Lichtscheibe (7) ein lösbar an der Fahrzeugleuchte befestigtes separates Teil ist,
- der Steg (14) der Grundplatte (4) zwischen den beiden Längsseiten und in Richtung der Längserstreckung der Grundplatte verläuft,
- der Außenrand des Gehäuses (1) und der Grundplatte (4) miteinander und zusätzlich der Steg (14) der Grundplatte (4) mit seiner Stirnfläche mit der Innenseite des Gehäuses (1) verschweißt sind, wobei beim Schweißvorgang der Steg (14) und das Gehäuse (1) ausschließlich im Bereich ihrer Grenzfläche plastifiziert werden.

2. Fahrzeugleuchte nach Anspruch 1, dadurch gekennzeichnet, daß bei einer rechteckförmigen Grundplatte (4) der Steg (14) in einem äquidistanten Abstand zu den Längsseiten der Grundplatte (4) bzw. des Gehäuses (1) verläuft.

3. Fahrzeugleuchte nach Anspruch 1 oder 2, dadurch gekennzeichnet, daß der Steg (14) in seiner Längsausdehnung unterbrochen ist.

4. Fahrzeugleuchte nach einem der Ansprüche 1 bis 3, dadurch gekennzeichnet, daß an der Grundplatte Böckchen (9) für die Befestigung der Lichtscheibe (7) angeformt sind.

5. Fahrzeugleuchte nach einem der Ansprüche 1 bis 4, dadurch gekennzeichnet, daß mehrere parallel verlaufende und/oder sich kreuzende Stege an die Grundplatte (4) angeformt und mit dem Gehäuse (12) verschweißt sind.

6. Verfahren zur Herstellung der Schweißverbindung zwischen Gehäuse und Grundplatte einer Fahrzeugleuchte nach Anspruch 1, dadurch gekennzeichnet, daß als Schweißverfahren das Reibschweißen angewendet wird.

## Claims

1. Vehicle lamp, which can be fastened mounted on a body part and the interior of which is formed by a plastics base plate which can be fixed to the body, by a dish-shaped plastics housing and by a light screen disposed in an opening in a lateral housing wall, and at least one web being moulded on the base plate, on which web the housing rests with its inner side, characterized in that in the case of a vehicle lamp whose base plate (4) has a greater length than width,
- the light screen (7) is a separate part which is fastened detachably to the vehicle lamp,
- the web (14) of the base plate (4) runs between the two longitudinal sides and in the direction of the longitudinal extent of the base plate,
- the outer margin of the housing (1) and base plate (4) are welded together and, in addition, the web (14) of the base plate (4) is welded with its end face to the inner side of the housing (1), the web (14) and the housing (1) being plasticized during the welding procedure solely in the region of their interface.

2. Vehicle lamp according to Claim 1, characterized in that, in the case of a rectangular base plate (4), the web (14) runs equidistant to the longitudinal sides of the base plate (4) and housing (1) respectively.

3. Vehicle lamp according to Claim 1 or 2, characterized in that the web (14) is interrupted in its longitudinal extent.

4. Vehicle lamp according to one of Claims 1 to 3, characterized in that brackets (9) for the fastening of the light screen (7) are moulded to the base plate.

5. Vehicle lamp according to one of Claims 1 to 4, characterized in that a plurality of parallel-running and/or intersecting webs are moulded on the base plate (4) and welded to the housing (12).

6. Process for the production of the weld joint between the housing and the base plate of a vehicle lamp according to Claim 1, characterized in that friction-welding is used as the welding process.

## Revendications

1. Feu d'éclairage de véhicule qui est susceptible d'être posé et fixé sur une partie de carrosserie, dont l'espace intérieur est formé par une plaque de base en matière plastique qui peut être montée sur la carrosserie, par un boîtier en matière plastique en forme de coque et par une plaque d'éclairement qui est agencée dans une ouverture d'une paroi de boîtier latérale, au moins une traverse, sur laquelle le boîtier repose avec sa face intérieure, étant formée sur la plaque de base, caractérisé en ce que dans un feu d'éclairage de véhicule, dont la longueur de la plaque de base (4) est plus grande que sa largeur,
- la plaque d'éclairement (7) est une pièce séparée fixée de manière détachable sur le feu d'éclairage du véhicule,
- la traverse (14) de la plaque de base (4) s'étend entre les deux côtés longitudinaux et en direction de l'extension longitudinale de la plaque de base, et
- le bord extérieur du boîtier (1) est soudé à celui de la plaque de base (4), et en plus, la traverse (14) de la plaque de base (4) est soudée par sa face frontale à la face intérieure du boîtier (1), la traverse (14) et le boîtier (1) étant plastifiés lors de l'opération de soudage exclusivement dans la zone de leur surface de séparation.

2. Feu d'éclairage de véhicule selon la revendication 1, caractérisé en ce que lorsque la plaque de base (4) est rectangulaire, la traverse (14) s'étend approximativement à équidistance des côtés longs de la plaque de base (4) ou du boîtier (1), respectivement.

3. Feu d'éclairage de véhicule selon l'une ou l'autre des revendications 1 et 2, caractérisé en ce que la traverse (14) est interrompue dans son extension longitudinale.

4. Feu d'éclairage de véhicule selon l'une quelconque des revendications 1 à 3, caractérisé en ce que des petites pattes d'attache (9) sont formées sur la plaque de base (4) pour fixer la plaque d'éclairement (7).

5. Feu d'éclairage de véhicule selon l'une quelconque des revendications 1 à 4, caractérisé en ce que plusieurs traverses parallèles et/ou se croisant sont formées sur la plaque de base (4) et soudées avec le boîtier (1).

6. Procédé de réalisation d'une liaison soudée entre le boîtier et la plaque de base d'un feu d'éclairage de véhicule selon la revendication 1, caractérisé en ce que le procédé de soudage mis en oeuvre est le soudage par friction.
